# EUROPÄISCHE PATENTANMELDUNG

(11) **EP 4 607 669 A1**
(43) Veröffentlichungstag der Anmeldung: **27.08.2025**
(21) Anmeldenummer: 25000019.7
(22) Anmeldetag: 22.02.2025
(51) Int. Cl.: H01M 50/213, H01M 50/258, H01M 10/42, H01M 10/48, H01M 10/613, H01M 10/643, H01M 50/51

(54) **ELEKTRISCHER ENERGIESPEICHER**

(30) Priorität: 26.02.2024 DE 102024000606
(71) Anmelder: Fachhochschule Dortmund, Körperschaft des öffentlichen Rechts, 44139 Dortmund (DE)
(72) Erfinder: KEMPEN, Stefan, 59821 Arnsberg (DE); LESSMANN, Florian, 44143 Dortmund (DE); THUROW, Johannes, 44359 Dortmund (DE); KIEL, Martin, 44879 Bochum (DE)
(74) Vertreter: Schneider, Uwe

(57) **Zusammenfassung**

Die Erfindung betrifft eine Vorrichtung zum Speichern von elektrischer Energie, bei der eine Anzahl von Batteriezellen (6) modulartig in Batteriemodulen (2) gehalten und elektrisch miteinander verschaltet angeordnet sind, wobei mindestens zwei derartige Batteriemodule (2) in einer stapelartigen Anordnung einander zugeordnet und elektrisch miteinander verschaltet angeordnet sind, bei der die Vorrichtung aus mindestens einer Makrozelle (1) oder einer Anzahl von parallel und/oder in Reihe geschalteten Makrozellen (1) gebildet ist, wobei jede Makrozelle (1) aus in Reihe geschalteten Subeinheiten (2) besteht und die Subeinheiten (2) eine Anzahl von Batteriezellen (6) enthalten, die wiederum in Reihe geschaltet sind, und die Subeinheiten (2) hintereinander in einem sich vorzugsweise längs erstreckenden Trägergehäuse (21), vorzugsweise einem Rohr oder dgl., verschiebbar angeordnet sind.

## Beschreibung

Elektrische Energiespeicher gewinnen insbesondere durch die Zunahme elektrisch angetriebener Fahrzeuge wie etwa Personenkraftwagen und Lastwagen zunehmende Bedeutung. Zudem wird es aufgrund der laufenden Energiewende weg von Kohlenstoff-basierter Energieerzeugung hin zu erneuerbaren Energien immer wichtiger, die bei den derzeit zentralen erneuerbaren Energieerzeugern Solarstrom und Windkraft auftretenden Dunkelphasen auch dadurch zu überbrücken, dass während Überschussphasen der erneuerbar erzeugten Energie erzeugte Strommengen in Batteriespeichern eingespeichert und bei Bedarf kurzfristig wieder abgerufen werden können. Hierzu kommen zunehmend auch stationäre elektrische Energiespeicher zur Anwendung, die in der Regel aus einer Vielzahl von Batterie-Einzelzellen bestehen, die in Batteriemodulen angeordnet werden und elektrisch seriell und/oder parallel miteinander verschaltet werden. Der Betrieb eines aus derartigen Batteriemodulen gebildeten Energiespeichers erfordert eine laufende Überwachung des Zustandes der Batteriemodule bzw. der darin verbauten Einzelzellen, wozu Batteriemanagementsysteme (BMS) verwendet werden, die über Sensoren an den Modulen oder Einzelzellen deren Zustand überprüfen und an Batteriemanagementsystem-Master (BMS) übermitteln. Hierdurch werden Fehler im Betriebzustand des elektrischen Energiespeichers erkennbar und es können entsprechende Gegenmaßnahmen eingeleitet werden, bevor die Funktion des elektrischen Energiespeichers nennenswert eingeschränkt wird.

Bisherige elektrische Energiespeicher im Stand der Technik arbeiten mit Spannungen bis 1,5 kV. Bei dieser Spannung werden hohe Ströme verwendet, um entsprechende Leistungen bereitzustellen. Da die Verluste solcher System mit dem Quadrat der Stromstärke einhergehen, ist eine Verringerung der Systemstromes bei Beibehaltung der Leistung sinnvoll. Die hohen elektrischen Ströme derartiger elektrischer Energiespeicher haben zudem das Problem, dass große Leitungsquerschnitte zur Verschaltung der Module sowie zur Kontaktierung über die Module hinaus benötigt werden.

Damit der Systemstrom reduziert werden kann, ist es denkbar, dass die Systemspannung erhöht wird. Aktuell gibt es keine handelsüblichen oder nach industriellen Standards gefertigte Batteriesysteme mit einer Systemspannung größer als 1,5 kV.

Weiterhin besteht das Problem, den modular ausgebildeten elektrischen Energiespeicher aus einer Vielzahl von Modulen und Einzelzellen mechanisch und elektrisch so miteinander zu verbinden, dass sich gut handhabbare Einzelbausteine bilden lassen, die elektrisch auf einfache und sichere Weise miteinander verschaltet werden und gleichzeitig mechanisch sicher gehandhabt und einander zugeordnet werden können.

Die DE 10 2017 219 928 A1 beschreibt ein Modulgehäuse für ein stapelbares Batteriemodul, aus dem ein Batteriestapel aus mehreren derartigen Batteriemodulen gestapelt werden kann, wobei jedes Modulgehäuse aus einem Bodenabschnitt und Wandabschnitten besteht und über Dichtungsbereiche mit angrenzenden Modulgehäusen gestapelt angeordnet werden kann.

Aufgabe der vorliegenden Erfindung ist es daher, einen elektrischen Energiespeicher für höhere Spannungen vorzuschlagen, der modular und skalierbar ausgelegt ist und einen einfachen elektrischen und mechanischen Aufbau aufweist.

Die vorliegende Erfindung beschreibt eine Vorrichtung zum Speichern von elektrischer Energie, bei der eine Anzahl von Batteriezellen modulartig in Batteriemodulen gehalten und elektrisch miteinander verschaltet angeordnet sind, wobei mindestens zwei derartige Batteriemodule in einer stapelartigen Anordnung einander zugeordnet und elektrisch miteinander verschaltet angeordnet sind. Eine derartige gattungsgemäße Vorrichtung wird dadurch in erfindungsgemäßer Weise weiter entwickelt, dass die Vorrichtung aus mindestens einer Makrozelle oder einer Anzahl von parallel und/oder in Reihe geschalteten Makrozellen gebildet ist, wobei jede Makrozelle aus in Reihe geschalteten Subeinheiten besteht und die Subeinheiten eine Anzahl von Batteriezellen enthalten, die wiederum in Reihe geschaltet sind, und die Subeinheiten hintereinander in einem sich vorzugsweise längs erstreckenden Trägergehäuse, vorzugsweise einem Rohr oder dgl., verschiebbar angeordnet sind. Der modulare Aufbau der Makrozelle aus einzelnen Subeinheiten, die in Reihe zueinander geschaltet sind und die Batteriezellen beinhalten, ermöglicht eine Anordnung der Sub-einheiten derart, dass die Subeinheiten sich in einem sich vorzugsweise längs erstreckenden Trägergehäuse anordnen und darin relativ zu dem Trägergehäuse verschieben lassen, wodurch die Anordnung der Subeinheiten in dem Trägergehäuse einfach geändert und etwa an aufgetretene Fehler in den Subeinheiten oder einzelnen Batteriezellen einer Subeinheit angepasst werden kann. Gleichzeitig sind die Subeinheiten in dem Trägergehäuse sicher aufgenommen und gehaltert, so dass die Zuordnung der Subeinheiten zueinander während des Betriebs der Vorrichtung sicher aufrecht erhalten werden kann. Die Subeinheiten können relativ zu dem Trägergehäuse einfach verschoben werden, um etwa eine defekte Subeinheit aus dem Trägergehäuse zu entfernen, indem bei einem etwa längsförmig erstreckten Trägergehäuse die Subeinheiten von einem Ende des z.B. offenen Trägergehäuses zum anderen, ebenfalls offenen Ende verschoben werden, solange, bis die defekte oder zu wartende Subeinheit aus dem Trägergehäuse frei kommt und z.B. gegen eine intakte Subeinheit ausgetauscht werden kann. Hierdurch ist ein Austausch oder auch eine Wartung der Subeinheiten sehr einfach möglich. Die Anzahl der Subeinheiten in dem Trägergehäuse einer Makrozelle kann dabei an die gewünschte Gesamtspannung der Makrozelle angepasst werden, also etwa, indem als Anzahl der Subeinheiten 15 Subeinheiten gewählt wird, die z.B. eine Gesamtspannung von 1500 V je Makrozelle ergeben. Die Länge des Trägergehäuses und damit die Anzahl der aufnehmbaren und in Reihe verschaltbaren Subeinheiten lässt sich einfach und ohne grundlegende Änderungen des Aufbaus der Makrozelle wie gewünscht anpassen.

Von weiterem Vorteil hinsichtlich der Modularisierung der Vorrichtung ist es, wenn jede Subeinheit mindestens eine blockartige Aufnahme mit einer Anzahl, vorzugsweise zylindrischer, Aufnahmeöffnungen zur Aufnahme von Batteriezellen aufweist. Hierdurch kann eine abhängig von den Abmessungen des Subsystems vorgebbare Anzahl von Batteriezellen in einem Subsystem aufgenommen werden, indem die Batteriezellen in die Aufnahmeöffnungen der blockartigen Aufnahme eingesetzt und von der blockartigen Aufnahme zueinander passend positioniert und gehaltert werden. Die blockartige Aufnahme kann z.B. runde Aufnahmeöffnungen aufweisen, in die zylindrisch runde Batteriezellen eingesteckt werden, deren runde Form fertigungstechnisch bedingt viel hergestellt wird und daher häufig als Zukaufteile am Markt verfügbar sind. Die Aufnahmeöffnungen der blockartigen Aufnahme bringen dabei in weiterer Ausgestaltung die Batteriezellen in eine strukturierte, vorzugsweise sechseckige, Anordnung zueinander oder die Batteriezellen weisen dadurch eine Anordnung im Sinne einer dichten Packung zueinander auf. Hierdurch wird der Bauraum innerhalb der Subeinheit bestmöglich ausgenutzt, wodurch eine hohe Energiedichte der Subeinheit erreicht werden kann. Es ist aber selbstverständlich auch möglich, etwa aus thermischen Gründen, die Batteriezellen in der blockartigen Aufnahme in eine andere Anordnung zu bringen.

Von besonderem Vorteil ist es, wenn die blockartige Aufnahme eine dem sich längs erstreckenden Trägergehäuse angepasste Umfangsform aufweist. Hierdurch kann der Bauraum innerhalb des Subsystems der gewählten Form des Trägergehäuses angepasst und die Raumausnutzung optimiert werden.

Von besonderem Vorteil ist es, wenn die blockartige Aufnahme einen Kontaktierungsraum, vorzugsweise in einem, insbesondere abgeflachten, Umfangsbereich, aufweist, in den Kontaktierungs- und Leiteinrichtungen zur elektrischen Verbindung der Batteriezellen mit weiteren Kontaktierungs- und Leiteinrichtungen der Subeinheit oder weiterer Subeinheiten einbringbar sind. Die Batteriezellen der Subeinheit müssen einerseits miteinander, vorzugsweise in Reihenschaltung, verschaltet werden, andererseits müssen die Subeinheiten einer Makrozelle selbst wiederum, vorzugsweise ebenfalls in Reihenschaltung, miteinander verschaltet werden, um die gewünschte Gesamtspannung der Makrozelle zu gewährleisten. Hierfür müssen die Subeinheiten in elektrischem Kontakt zueinander gebracht werden, möglichst ohne dass aufwändig Kabel oder dgl. zwischen den Subeinheiten gezogen werden müssen. Hierzu dient ein vorzugsweise im Umfangsbereich der Subeinheiten vorsehbarer und freigehaltener Einbauraum, der derartige Kontaktierungs- und Leiteinrichtungen für die Verbindung zu den jeweils benachbarten Subeinheiten aufnehmen und elektrisch isolierend umgrenzen kann. In diesen Einbauraum können dann z.B. Kontakte tragende Platinen oder dgl. eingebracht werden, die über Kontakte an die Batteriezellen benachbarter Subeinheiten angesteckt werden und die Verbindung damit gleichzeitig mit dem Stecken herstellen.

Für die einfache Zuordnung der Bauteile der Subeinheiten ist es von Vorteil, wenn der insbesondere abgeflachte Umfangsbereich gleichzeitig auch die Verdrehorientierung der blockartigen Aufnahme beim Zusammenstecken der Subeinheiten vorgibt. Wird ein z.B. runder scheibenförmiger Aufbau der blockartigen Aufnahme einer Subeinheit gewählt, ist es von großer Wichtigkeit, die blockartigen Aufnahmen aller Subeinheiten gleich ausgerichtet zusammen zu bauen und auch die Kontaktierungen zwischen den Subeinheiten einfach und richtig drehorientiert herzustellen. Dies wird mit einem einheitlichen Montagebild erreicht, in dem etwa ein abgeflachter Umfangsbereich der blockartigen Aufnahmen in entsprechende Gegenformen eingesteckt werden muss, um eine ordnungsgemäße Montage zu gewährleisten. Montagefehler können so einfach ausgeschlossen werden.

Weiterhin ist es denkbar, in den Kontaktierungsraum der blockartigen Aufnahme, vorzugsweise platinenartig ausgestaltete, Kontaktierungs- und Leiteinrichtungen einzusetzen, mit denen die Batteriezellen und benachbarte blockartige Aufnahmen anderer Subeinheiten miteinander verbindbar und elektrische Ströme und/oder elektrische Signale weiterleitbar sind. Derartige platinenartig ausgestaltete Kontaktierungsund Leiteinrichtungen lassen sich zum einen einfach und kostengünstig in großen Stückzahlen herstellen und bieten Platz für die notwendigen Steckkontakte bzw. Berührungskontakte an den Subeinheiten. Zum anderen können auf derartigen Platinen auch zusätzliche Einrichtungen wie z.B. Sensoren, Auswerteeinheiten, Kommunikationseinheiten oder dgl. angeordnet werden, die für den Betrieb der Subeinheiten notwendig oder förderlich sind, So kann z.B. in einer Weiterbildung in den Kontaktierungsraum der blockartigen Aufnahme mindestens eine Messeinrichtung eingesetzt werden, mit der der Zustand der Batteriezellen, insbesondere der elektrische und/oder thermische Zustand und/oder ein Fehlerzustand, überprüfbar ist. Eine derartige beispielhaft genannte Messeinrichtung kann dann zur laufenden Kontrolle der entsprechenden Subeinheit bzw. der darin verbauten Batteriezellen genutzt werden und deren Betrieb absichern oder überprüfen sowie mit einem Batteriemanagementsystem kommunizieren.

Eine einfache Anzeige von Fehlfunktionen einer Subeinheit lässt sich z.B. auch dadurch erreichen, dass die blockartige Aufnahme oder auch ein von außen sichtbares Bauteil der Subeinheit ein Material aufweist, das bei thermischer Erwärmung dauerhaft seine Farbe ändert. Wird etwa durch eine Fehlfunktion der Batteriezellen die Subeinheit zu heiß, so kann dies durch Verfärbungen des thermisch sich verändernden Materials angezeigt werden, was z.B. für Wartungszwecke durchaus von Vorteil sein kann, da man die fehlerhafte Subeinheit unmittelbar erkennt, wenn sie etwa bei einer Wartung aus dem Trägergehäuse frei wird.

Für die Handhabbarkeit und Montageverbesserung der Subeinheiten ist es von Vorteil, wenn die blockartige Aufnahme sowie die Kontaktierungs- und Leiteinrichtungen im Bereich des Kontaktierungsraums in eine Außenhülle eingebracht werden. Die Außenhülle, die sich vorteilhaft natürlich an die Querschnittsform des Trägergehäuses anpasst, nimmt alle Bauteile der Subeinheiten auf und umgrenzt diese derart, dass sie im Ganzen gehandhabt und innerhalb des Trägergehäuses verschoben werden können. Wird das Trägergehäuse rund ausgebildet, so wird auch die Außenhülle der Subeinheiten wiederum rund ausgebildet sein, mit einem Außenmaß, das ein wenig kleiner als das Innenmaß des Trägergehäuses gewählt wird, um eine leichte Verschiebbarkeit der von der Außenhülle umgrenzten Subeinheiten in dem Trägergehäuse zu gewährleisten.

Weiterhin ist es von Vorteil, wenn die blockartige Aufnahme durch den, vorzugsweise abgeflachten, Umfangsbereich in der sich längs erstreckenden Außenhülle nur korrekt drehorientierbar montierbar ist. Hierdurch ist immer gewährleistet, dass die Subeinheiten korrekt vormontiert sind, um dann zur korrekten Anordnung in der Makrozelle in das Trägergehäuse eingeschoben zu werden.

In weiterer Ausgestaltung ist es von Vorteil, wenn im Bereich oberhalb und unterhalb jeder blockartigen Aufnahme einer Subeinheit eine obere und eine untere Verbindungsplatte angeordnet sind, die einerseits in den Bereich der Enden der Batteriezellen, diese elektrisch kontaktierend, eingreift und andererseits in den Kontaktierungsraum der blockartigen Aufnahme mit den Kontaktierungs- und Leiteinrichtungen und/oder der Messeinheit hinein greift. Die Verbindungsplatten sorgen dadurch für die Voraussetzung, die Batteriezellen elektrisch leitend mit den Kontaktierungsund Leiteinrichtungen und ggf. auf den Kontaktierungs- und Leiteinrichtungen vorhandenen zusätzlichen Funktionsbauteilen wie z.B. Sensoren zu verbinden, indem die Verbindungsplatten die in den blockartigen Aufnahmen angeordneten Batteriezellen übergreift und jeweils in elektrischen und/oder mechanischen Kontakt mit den Batteriezellen treten. Auf den Verbindungsplatten sind dann Leiterbahnen oder dgl. leitfähige Einrichtungen vorgesehen, die die Batteriezellen, vorzugsweise seriell, miteinander und mit den Kontaktierungs- und Leiteinrichtungen und/oder der Messeinheit verbinden und so die aus den Batteriezellen stammenden Einzelspannungen addieren und in den Bereich der Kontaktierungs- und Leiteinrichtungen weiterleiten, wo diese wiederum über entsprechende Kontakte an benachbarte Subeinheiten und damit insgesamt an Schnittstellen der Makrozellen weiter geleitet werden können. Die Verbindungsplatten stellen also durch einfaches Einstecken in die Subeinheiten alle notwendigen Verbindungen zwischen den Batteriezellen und der Peripherie der Subeinheiten zur Verfügung. Hierzu sind an den Verbindungsplatten entsprechende Kontaktstellen zur elektrischen Kontaktierung der Batteriezellen angeordnet, die z.B. über federnde Elemente einen sicheren Kontakt mit den Enden der Batteriezellen herstellen und dadurch die Spannungspotentiale der Batteriezellen sicher abgreifen.

Hierbei ist es von besonderem Vorteil, wenn die obere und untere Verbindungsplatte die Batteriezellen berührungsgeschützt abdecken. Bei der Handhabung der Subeinheiten dürfen die Kontakte der Batteriezellen auf keinen Fall unbeabsichtigt berührt werden können, da dadurch Wartungspersonal verletzt werden kann. Dies wird durch Verbindungsplatten erreicht, die auf den von den im Montagezustand den Batteriezellen abgewandt liegenden Flächen nichtleitend ausgebildet sind und alle möglichen Berührungsbereiche mit den Batteriezellen oder sonstigen spannungsführenden Bauteilen der Subeinheiten schützend übergreifen. Auch sollten für eine korrekte Montage auch die Verbindungsplatten eine entsprechende, schon beschriebene Umfangsgestaltung aufweisen, um die korrekte Drehorientierung der Verbindungsplatten bei der Montage einfach und sicher zu gewährleisten.

Eine weitere Vereinfachung lässt sich dadurch erreichen, wenn die obere und untere Verbindungsplatte symmetrisch aufgebaut sind. Hierdurch wird zum Einen die erforderliche Teilevielfalt der Bauteile der Subeinheiten verringert und eine falsche Zuordnung der jeweils einzubauenden Verbindungsplatten relativ zu den Batteriezellen verhindert.

Für die einfache und schnelle Montierbarkeit und die Herstellung sicherer Kontaktierung zwischen den Bauteilen der Subeinheiten ist es von Vorteil, wenn obere und untere Verbindungsplatte und die vorzugsweise platinenartig ausgebildeten Kontaktierungs- und Leiteinrichtungen elektrisch kontaktierend und mechanisch klemmend abschnittsweise ineinander steckbar sind. Die Kontaktierungs- und Leiteinrichtungen übertragen hierbei die von den Verbindungsplatten aus dem Bereich der Batteriezellen kommenden Leiterbahnen innerhalb einer Subeinheit miteinander, ebenfalls können die Kontaktierungs- und Leiteinrichtungen aber auch zu einer Verbindung benachbart anzuordnender Subeinheiten miteinander über entsprechende Steckkontakte oder dgl. Kontaktierungsmöglichkeiten genutzt werden. Die Kontaktierungsund Leiteinrichtungen bilden daher die elektrische Verbindung der Bauteile innerhalb einer Subeinheit, aber auch die elektrische und ggf. mechanische Anbindung einer Subeinheit an benachbart angeordnete Subeinheiten. Hierfür lassen sich eine Vielzahl an sich bekannter, unterschiedlicher elektrische Steckverbinder verwenden, so dass der Steckvorgang der Subeinheiten untereinander, aber auch innerhalb einer Subeinheit sicher und einfach ausgeführt werden kann.

In weiterer Ausgestaltung können als Kontaktierungs- und Leiteinrichtungen mindestens eine mehradrige Leiteinrichtung für die Spannung der Batteriezellen und mindestens eine mehradrige Leiteinrichtung, vorzugsweise über ein Bussystem, zur Übermittlung der Daten einer Messeinheit oder dgl. vorgesehen sein. Hierdurch werden getrennt voneinander die elektrische Spannung und die ggf. durch an den Kontaktierungs- und Leiteinrichtungen angeordnete Sensoren gewonnene Daten übertragen bzw. Steueranweisungen von übergeordneten Steuereinheiten an die Subeinheiten übermittelt. Von Vorteil ist es insbesondere im Hinblick auf die Sicherheit im Betrieb der Subeinheiten, diese mehradrige Leiteinrichtung ggf. auch redundant auszuführen.

Von Vorteil ist es weiterhin, wenn die Verbindungsplatten in dem Kontaktierungsraum im Bereich der blockartigen Aufnahme, vorzugsweise die Batteriezellen mechanisch halternd, einsteckbar und verrastbar gehalten sind. Die Verbindungsplatten stellen dann nicht nur die elektrischen Kontakte zur Verfügung, sondern sie stellen auch die mechanische Stabilität der Anordnung der Bauteile der Subeinheiten sicher, so dass die Subeinheiten als Ganzes einfach und sicher gehandhabt und auch innerhalb des Trägergehäuses verschoben werden können.

In weiterer Ausgestaltung können die Kontaktierungs- und Leiteinrichtungen in Halteplatten aufgenommen sind, die die Kontaktierungs- und Leiteinrichtungen berührungsgeschützt umgeben und an der Außenhülle der Subeinheit festlegbar sind. Ebenso wie der Schutz gegen unbeabsichtigtes Berühren von Batteriezellen und Verbindungsplatten müssen die Spannungen, die über die Kontaktierungs- und Leiteinrichtungen innerhalb der Subeinheiten und nach außerhalb der Subeinheiten geleitet werden, gegen unbeabsichtigtes Berühren geschützt werden. Hierfür können die Kontaktierungs- und Leiteinrichtungen zusätzlich zumindest außenseitig durch aus nichtleitendem Material gebildeten Halteplatten überspannt werden, die zudem zur mechanischen Halterung du Stabilisierung der Kontaktierungs- und Leiteinrichtungen genutzt werden können.

Für die Gewährleistung eines Berührungsschutzes an den Außenflächen der Subeinheiten ist es denkbar, dass der Bereich des Kontaktierungsraums für die Kontaktierungs- und Leiteinrichtungen derart von in oder an der Außenhülle angeordneten, vorzugsweise wallartigen Abschnitten der Außenhülle umgeben ist, dass die Kontaktierungs- und Leiteinrichtungen zur Kontaktierung mit benachbarten Subeinheiten berührungsgeschützt in einem nutartig vertieften Bereich zu liegen kommen. Die z.B. als Steckkontakte ausgebildeten, zwangsläufig zu benachbarten Subeinheiten hin zu öffnenden Kontaktstellen an den Außenseiten der Subeinheiten dürfen gleichwohl nicht einfach berührt werden können, um elektrische Schläge sicher auszuschließen. Hierfür werden diese außenliegenden Kontakte in nutartigen, wallartig umgrenzten Außenbereichen der Subeinheiten so angeordnet, dass Bedienungspersonal nicht unbeabsichtigt diese Kontakte berühren kann. Die nutartigen Vertiefungen, in denen die Kontakte angeordnet werden, sind dabei so schmal ausgebildet, dass man mit den Fingern nicht in diese Vertiefungen hinein kommt und damit die Kontakte auch nicht unbeabsichtigt berühren kann.

Derartige nutartige, wallartig umgrenzte Außenbereichen der Subeinheiten können auch dazu genutzt werden, um benachbarte Subeinheiten einfach und passgenau einander zuzuordnen. Hierfür kann die Außenhülle jeder Subeinheit oberseitig und unterseitig angeordnete Gehäuseformen aufweisen, die mit zugeordnet gegengleichen Gehäuseformen benachbart angeordneter Subeinheiten im gleichen Stapel der Makrozelle mechanisch zusammensteckbar und passgenau orientiert aneinander festlegbar sind. Derartige Steckgesichter erleichtern die Zuordnung der Subeinheiten ungemein. Dabei können im Bereich der zugeordnet gegengleichen Gehäuseformen benachbart angeordneter Subeinheiten entsprechende Kontakteinrichtungen angeordnet sein, die die mehradrige Leiteinrichtung für die Spannung und die mindestens eine mehradrige Leiteinrichtung zur Übermittlung der Daten der Messeinheit ineinander gesteckter Subeinheit miteinander elektrisch verbinden.

Von Vorteil für den Betrieb der Vorrichtung ist es, wenn jede Makrozelle mindestens ein Batteriemanagementsystem-Master (Master-BMS) aufweist. Ein derartiger Batteriemanagementsystem-Master kann alle Batteriezellen aller Subeinheiten der Makrozelle überwachen und ggf. korrigierend eingreifen, da der Batteriemanagementsystem-Master über die Kontaktierungs- und Leiteinrichtungen mit den Subeinheiten und den Batteriezellen verbunden ist und deren Zustand erfasst. Hierdurch werden Fehler in den Subeinheiten oder den Batteriezellen schnell erkannt und es kann entschieden werden, wie die geeignete Gegenreaktion bis hin zum Austausch der jeweiligen Subeinheit aussieht. In weiterer Ausgestaltung kann aber auch jede Subeinheit einen Batteriemanagementsystem-Slave (Slave-BMS) aufweisen, der über Kontaktierungs- und Leiteinrichtungen mit dem Batteriemanagementsystem-Master (Master-BMS) der Makrozelle in elektrischer Verbindung steht. Der Batteriemanagementsystem-Slave (Slave-BMS) kann z.B. die Messwerte mindestens einer Messeinheit zum Zustand der Batteriezellen an den Batteriemanagementsystem-Master (Master-BMS) übermitteln und umgekehrt Anweisungen des Batteriemanagementsystem-Master vor Ort bei den Subeinheiten ausführen. Alternativ ist es auch denkbar, dass der Batteriemanagementsystem-Slave (Slave-BMS) das Zellbalancing der Batteriezellen eigenständig und/oder zusammen mit dem Batteriemanagementsystem-Master (Master-BMS) ausführt.

Vorteilhaft kann es auch sein, wenn der Batteriemanagementsystem-Master (Master-BMS) an einer der Subeinheiten einer Makrozelle angeordnet ist und mit allen anderen Batteriemanagementsystem-Slaves (Slave-BMS) der anderen Subeinheiten der Makrozelle in elektrischer Verbindung steht. Hierdurch wird keine zusätzliche Baueinheit für den Batteriemanagementsystem-Master benötigt, sondern dieser in eine der Subeinheiten integriert. Denkbar ist aber auch, in der Reihung der Subeinheiten den Bauraum einer Subeinheit für einen Batteriemanagementsystem-Master (Master-BMS) freizuhalten und diesen dort anzuordnen.

In einer Ausgestaltung ist es von Vorteil, wenn eine derartige Anzahl von Batteriezellen in den Subeinheiten angeordnet und eine derartige Anzahl von Subeinheiten miteinander zu einer Makrozelle verschaltet sind, dass die Makrozelle eine Zellenspannung von vorzugsweise gleich oder mehr als 1,5 kV aufweist. Je höher die Spannung einer Makrozelle, umso geringer sind die Ströme beim Laden und Entladen der Makrozelle.

Die Erfindung umfasst weiterhin eine Anordnung einer Anzahl von Makrozellen in einem elektrischen Energiespeicher gemäß Anspruch 1, bei der die längserstreckten Trägergehäuse zur Aufnahme der Subeinheiten im Wesentlichen horizontal angeordnet und die Enden der Trägergehäuse offen sind, so dass automatische Handhabungseinrichtungen die innerhalb der längserstreckten Trägergehäuse befindlichen Subeinheiten aus dem längserstreckten Trägergehäuse ausstoßen und neue Subeinheiten in das längserstreckte Trägergehäuse einbringen können. Die Anordnung der Subeinheiten in einem Trägergehäuse ermöglicht die einfache und ggf. automatisch durchführbare Änderung der Anordnung der Subeinheiten in dem Trägergehäuse, wodurch einzelne Subeinheiten mit Defekten ohne große Umbauten oder Stillstandszeiten aus der Reihung der Subeinheiten dadurch entnommen werden kann, dass die zu entfernende Subeinheit solange in dem Trägergehäuse verschoben wird, bis sie am Ende des Trägergehäuses aus der Öffnung des Trägergehäuses ausgestoßen und aus dem Energiespeicher entnommen werden kann. Dies kann insbesondere auch durch automatisierte Handhabungsgeräte und ggf. auch unter Weiterbetrieb des Energiespeichers erfolgen, so dass Stillstandszeiten für die Wartung einer Subeinheit minimiert oder sogar ganz vermieden werden. Dies ist auch dadurch möglich, dass die automatisierten Handhabungsgeräte auch im Betrieb des Energiespeichers direkt am Energiespeicher angeordnet werden können, was für Wartungspersonal aus Sicherheitsgründen nicht erlaubt wäre.

Bevorzugt werden die Makrozellen bzw. die die Makrozellen aufnehmenden Trägergehäuse matrixartig parallel zueinander angeordnet und sind daher platzsparend und mit hoher Dichte unterzubringen. Die Beschickung der Trägergehäuse mit Subeinheiten und die Entnahme der Subeinheiten erfolgt jeweils endseits der Trägergehäuse und benötigt nur geringen Arbeitsraum.

Von Vorteil ist es, wenn die automatischen Handhabungseinrichtungen Verschiebeeinrichtungen aufweisen, die neue Subeinheiten zumindest in einen Abschnitt des längserstreckten Trägergehäuses hineinschieben können. Die Verschiebeeinrichtungen müssen nur relativ kurze Verschiebebewegungen ausführen, da ja immer nur eine Subeinheit vorwärts geschoben werden muss und diese dann die in Verschieberichtung davor angeordneten Subeinheiten weiter schiebt. Hierbei können etwa für Wartungszwecke die automatischen Handhabungseinrichtungen solange neue Subeinheiten in das längserstreckte Trägergehäuse hineinschieben, bis eine defekte Subeinheit aus dem Trägergehäuse heraus gedrückt wurde.

Von Vorteil ist es, wenn die Vorrichtung und die automatischen Handhabungseinrichtungen in ein abgeschlossenes Gehäuse oder Volumen eingebracht sind, das mit einer sauerstoffreduzierten oder inerten Atmosphäre geflutet werden kann. Hierdurch werden mögliche Brände des Energiespeichers etwa durch Überhitzung von Batteriezellen oder Subeinheiten weitgehend ausgeschlossen oder eingeschränkt, da eine sauerstoffreduzierte oder inerte Atmosphäre einem Brand entgegen wirkt. Denkbar ist es auch, dass die Makrozellen und/oder Subeinheiten durch die sauerstoffreduzierte oder inerte Atmosphäre kühlbar sind, ebenfalls wäre eine Kühlung mit einem Luftstrom denkbar.

Eine besonders bevorzugte Ausführungsform des erfindungsgemäßen Energiespeichers zeigt die Zeichnung.

Es zeigen:
- Figur 1: - einen schematischen Aufbau einer Subeinheit aus miteinander verschraubter oberer und unterer blockartiger Aufnahme und darin angeordneten korrespondierenden Aufnahmeöffnungen für Batteriezellen,
- Figur 2: - eine erste Ansicht einer Subeinheit gemäß Figur 1 mit darin angeordneten Batteriezellen und außenseitig angeordneter Platine für Kontaktierungs- und Leiteinrichtungen,
- Figur 3: - eine Ansicht der Subeinheit gemäß Figur 2 von unten, wobei die Subeinheit in eine Außenhülle eingesetzt und mit einer unterseitigen Verbinderplatte abgedeckt ist,
- Figur 4: - eine Ansicht einer Subeinheit gemäß Figur 2 von oben mit an der umlaufenden Kante der Außenhülle angeordneter Verbindungsaussparung zum Aufsetzen auf benachbarte Subeinheiten,
- Figur 5: - eine Ansicht einer Subeinheit gemäß Figur 2 von der Seite (obere Darstellung) und gestapelt auf einer weiteren Subeinheit (untere Darstellung),
- Figur 6: - eine Anordnung von komplett montierten Subeinheiten in einem rohrartigen Trägergehäuse, durch das die Subeinheiten durchgeschoben werden können,
- Figur 7: - schematischer Aufbau des Energiespeichers aus 15 aufeinander gestapelten Subeinheiten zur Erzeugung von z.B. 1,5 kV Spannung und einem Batteriemanagementsystem,

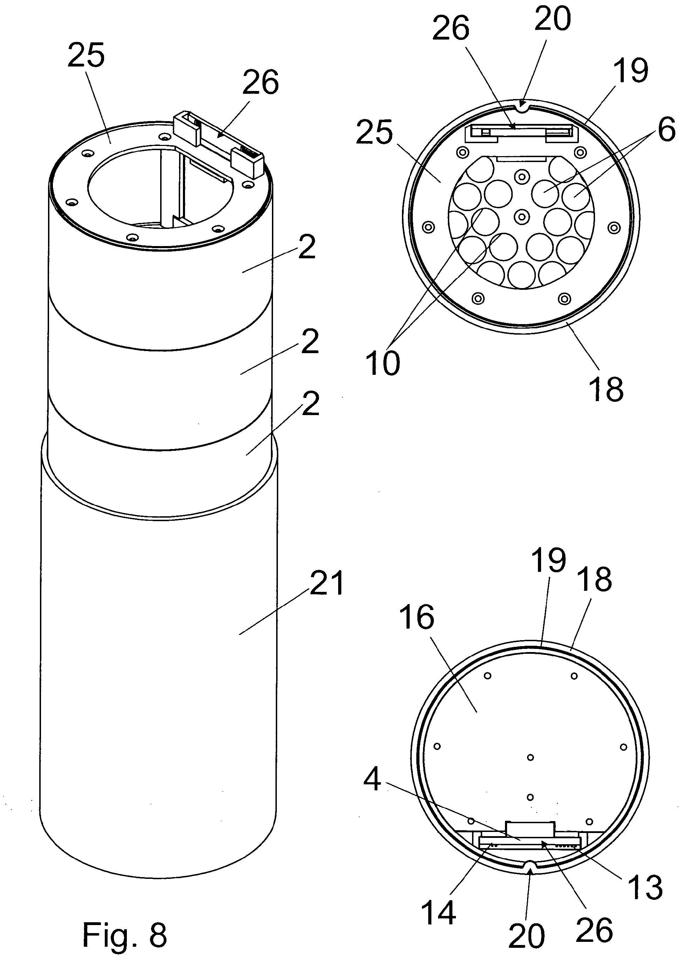

- Figur 8: - gestapelte Anordnung von Subeinheiten in einem Trägergehäuse und Ansichten einer komplett montierten Subeinheit von oben und unten,
- Figur 9: - räumliche Darstellung der Außenhülle einer Subeinheit mit daran angeordneten Aufnahmen für eine Halteplatte und eine Platine für Kontaktierungs- und Leiteinrichtungen,

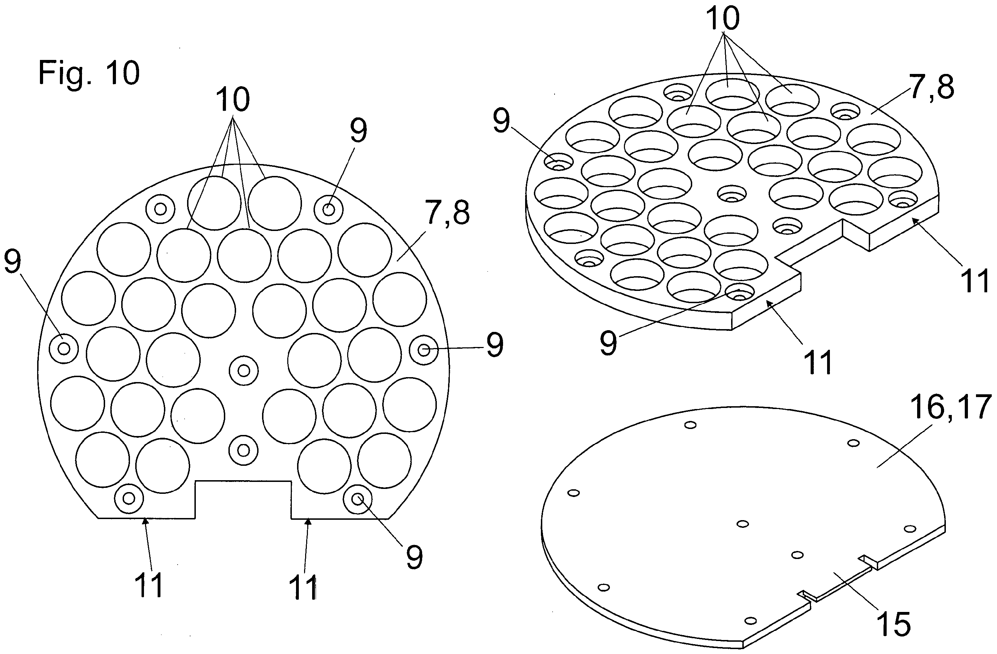

- Figur 10: - Ansicht einer blockartigen Aufnahme mit Aufnahmeöffnungen für Batteriezellen und Verbindungsplatte zur Kontaktierung und Verschaltung der Batteriezellen,
- Figur 11: - Halteplatte für die Aufnahme und Abdeckung der Platine für Kontaktierungs- und Leiteinrichtungen,
- Figur 12: - Platine für Kontaktierungs- und Leiteinrichtungen mit daran angeordneten Steckverbindern zur Kontaktierung an die Verbindungsplatten und benachbart angeordnete Subeinheiten,
- Figur 13: - mehrere Ansichten von unten und von der Seite übereinander gestapelter Subeinheiten mit Darstellung der hervorstehenden Platine für Kontaktierungs- und Leiteinrichtungen zur Kontaktierung mit einer benachbarten Subeinheit,
- Figur 14: - Ansichten von oben übereinander gestapelter Subeinheiten gemäß Figur 13 in einer seitlichen Ansicht.

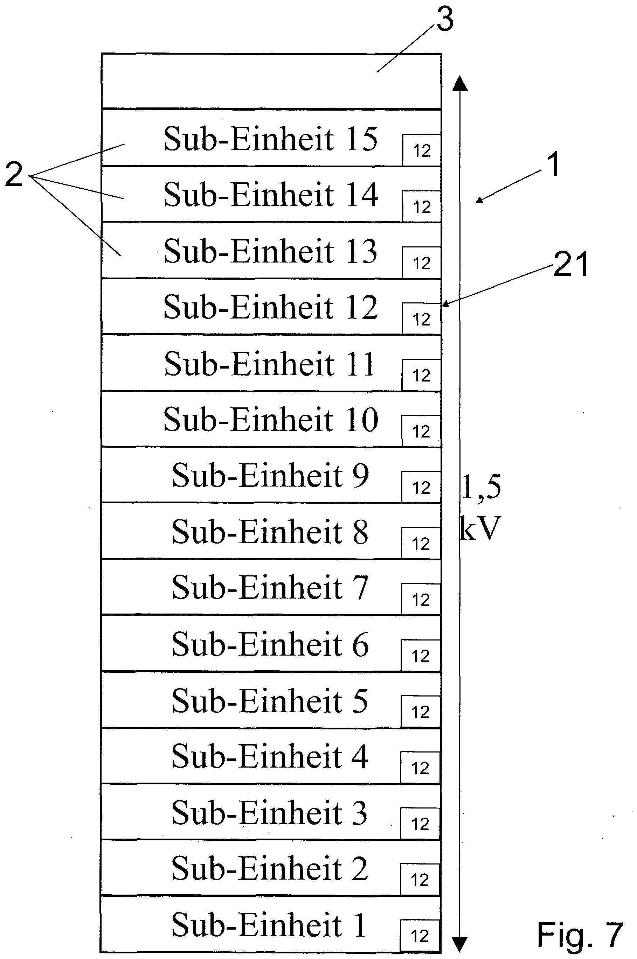

Die Erfindung betrifft einen Energiespeicher aus sog. Makrozellen 1 zur Bildung von Hochspannungsbatterien. Der Aufbau einer Makrozelle 1 als Verbund von z.B. 15 Subeinheiten 2 ist rein schematisch in der Figur 7 dargestellt. Eine solche Makrozelle 1 weist eine gestapelte Anordnung von Subeinheiten 2 in einem Trägergehäuse 21 auf und hat zum Beispiel eine Systemspannung von 1,5 kV. Jede Makrozelle 1 besitzt ein Master-Batteriemanagementsystem 3 ("BMS"). Diese Subeinheiten 2 haben z.B. jeweils eine Nennspannung von 100 V. Jede einzelne Subeinheit 2 besitzt einen Batteriemanagementsystem-Slave 12 und z.B. ein Messsystem 22, welches die Daten zum Master-Batteriemanagementsystem 3 oder den Batteriemanagementsystem-Slave 12 weiterleitet. Hierbei können zur Bildung größerer derartiger Energiespeicher mehrere oder viele Makrozellen 1 zusammen geschaltet werden, wobei der Energiespeicher aus parallel und in Reihe geschalteten Makrozellen 1 bestehen kann. Der Aufbau einer Makrozelle 1 ist weitgehend modularisiert und die Bauteile der die Makrozelle 1 primär bildenden Subeinheiten 2 sind einfach montierbar in einer Außenhülle 18 aufgenommen.

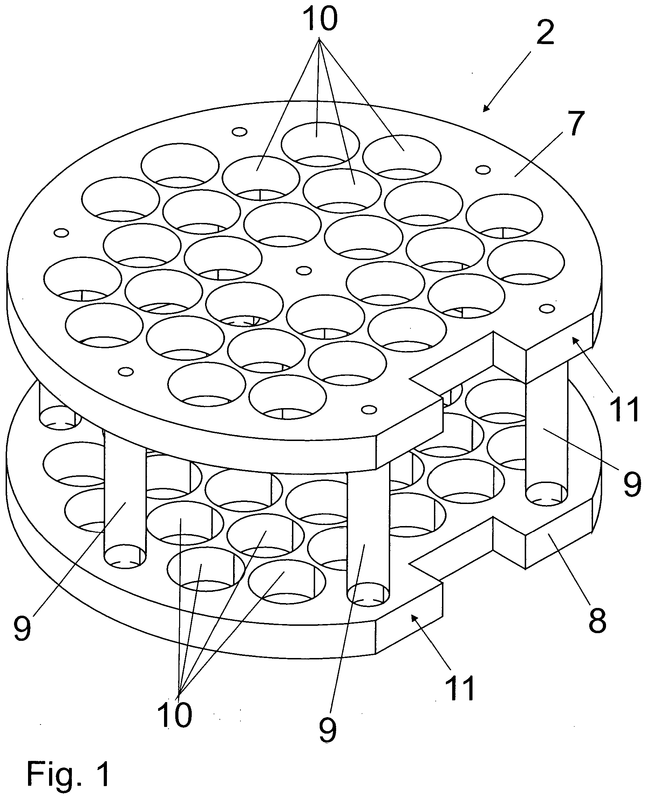

In einer Subeinheit 2 ist wie in der Figur 1 beispielhaft erkennbar Platz für z.B. 28 Batteriezellen 6, z.B. herkömmliche runde Zellen ähnlich wie Einzelbatterien. Selbstverständlich können andere Anzahlen von Batteriezellen 6 oder andere z.B. verbreitete Zellgeometrien zum Einsatz kommen.

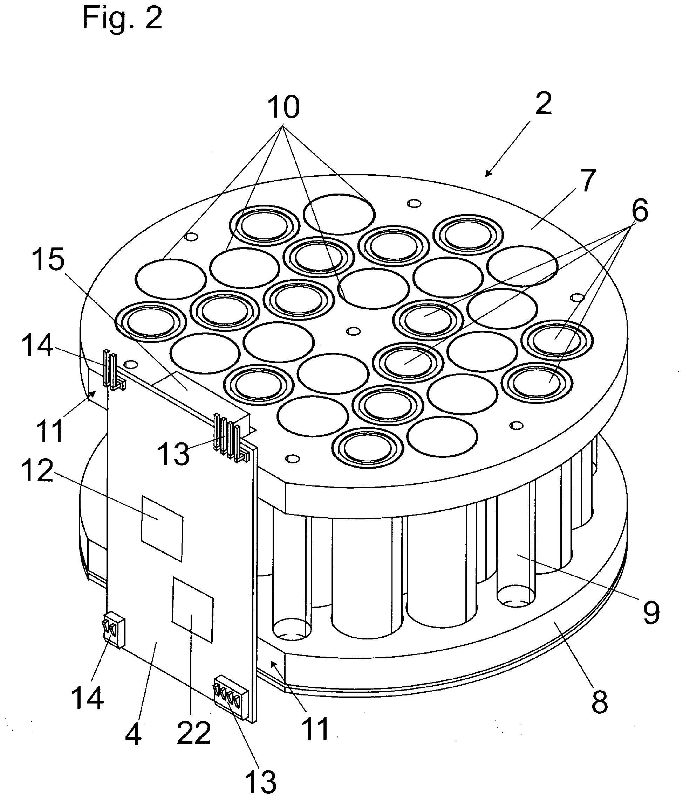

Die Batteriezellen 6 können in blockartigen Aufnahmen 7, 8 in Position innerhalb der Subeinheit 2 gehalten werden. Hierbei kann jede blockartige Aufnahme 7, 8 eine variable Zellenanordnung mit einem sinnvollen Packmaß aufweisen, eine etwa zeilen- und spaltenförmige Anordnung, eine grundsätzlich sechseckige Anordnung wie in den Figuren 1 und 2 dargestellt oder auch eine Anordnung im Sinne einer dichten Packung. Hier sind vielfältige Variationen denkbar. Die blockartigen Aufnahmen 7, 8 können entweder aus einem blockartigen Material mit entsprechenden Aufnahmeöffnungen 10 zur Aufnahme der Batteriezellen 6 oder wie in den Figuren 1 und 2 dargestellt aus zwei korrespondierend zueinander gelochten Scheiben 7, 8 bestehen, zwischen denen Verschraubungen 9 oder Spannelemente angeordnet werden, die die gelochten Scheiben 7, 8 beabstandet zueinander aneinander festlegen und so die Aufnahmeöffnungen 10 der blockartigen Aufnahmen 7, 8 übereinander anordnet, damit die Batteriezellen 6 eingesteckt werden können. Diese Gestaltung ermöglicht eine verbesserte Kühlung der Batteriezellen 6 und hält die Batteriezellen 6 mechanisch in Position zueinander.

Eine gewisse Anzahl an diesen Aufnahmeöffnungen 10 können auch nicht von Batteriezellen belegt werden, sondern diese Aufnahmeöffnungen 10 können stattdessen für ein Kühlsystem (z.B. mittels Luft, Gas, Kühlflüssigkeit, Feststoff mit hoher Wärmeleitfähigkeit, nach dem Prinzip der sog. Heat Pipe) genutzt werden könnten. Ein solches Kühlsystem könnte auch längs durch alle in einer Makrozelle angeordneten Aufnahmevorrichtungen hindurch verlaufen und muss unter Berücksichtigung der Isolationskoordination ausgeführt werden, also z.B. elektrisch isolierend sein.

Die blockartigen Aufnahmen 7, 8 haben ein Format und einen gerade ausgebildeten Randbereich 11, dass auch Platinen 4 und Elektronik in eine Subeinheit 2 hinein passen. Mögliches Material der blockartigen Aufnahmen 7, 8 kann ein thermoaktiver Kunststoff sein und er kann z.B. im 3D-Druck gefertigt werden. Als Material kann PLA gewählt werden. Dies ist recycelbar- und kompostierbar. Zusätzlich kann ein PLA verwendet werden, welches sich bei thermischer Einwirkung verfärbt. Somit können defekte Batteriezellen 6 oder Subeinheiten 2 leichter erkannt und ausgewechselt werden, nachdem eine Subeinheit 2 aus dem Trägergehäuse 21 entnommen worden ist.

An den blockartigen Aufnahmen 7, 8 mit den Batteriezellen 6 kann, wie in Figur 2 besser zu erkennen, eine Platine 4 mit nur schematisch angedeuteten Kontaktierungs- und Leiteinrichtungen 13, 14, 15 an der Seite der blockartigen Aufnahmen 7, 8 in einem hier gerade ausgebildeten Randbereich 11 der blockartigen Aufnahmen 7, 8 angeordnet und mechanisch und elektrisch mit den blockartigen Aufnahmen 7, 8 und den Batteriezellen 6 verbunden sein. Auf einer Platine 4 sind verschiedene Steckverbinder 13, 14, 15 zu erkennen, die einerseits zur Verbindung mit weiteren Subeinheiten 2 im Stapel der Makrozelle 1 dienen und andererseits zur Kontaktierung mit den Einzelzellen 6 dienen. Die in Figur 2 vorderseitig der Platine 4 angeordneten Steckkontakte 13, 14 dienen einmal zur Weiterleitung der von den Einzelzellen 6 bereit gestellten Spannungen (Steckkontakte 14) und zum Anderen (Steckkontakte 13) z.B. zur Weiterleitung der Messsignale eines auf der Platine 4 angeordneten Messsystems 22 und von Daten zum und vom Batteriemanagementsystem 3. Die Kontakte 13, 14, 15 können als herkömmliche Steckkontakte ausgebildet sein, wie sie in der Elektrotechnik vielfältig bekannt sind. Die Platine 4 kann auch mit den blockartigen Aufnahmen 7, 8 verschraubt werden und stellt dann einen mechanischen Verbund mit den blockartigen Aufnahmen 7, 8 her.

Die Überwachung einer Subeinheit 2 wird jeweils von einem Messsystem 22 übernommen. Das Messsystem 22 für jede Subeinheit 2 wird an der Subeinheit 2 befestigt. Das Messsystem 22 misst dabei charakteristische elektrische Werte oder auch Temperaturen der einzelnen Batteriezellen 6 und sendet die gemessenen Werte z.B. über ein Slave-BMS 12 an das Master-BMS 3, welches sich an einem Modul der Makrozelle 1 befindet. Das Master-BMS 3 wertet die Messwerte aus und gibt Meldung über den Zustand der Batteriezellen 6. Nach dessen Meldung können die einzelnen Subeinheiten 2 innerhalb des Stapels der Makrozelle 1 wie noch nachfolgend beschrieben durchgeschoben und aus der Makrozelle 1 entnommen werden.

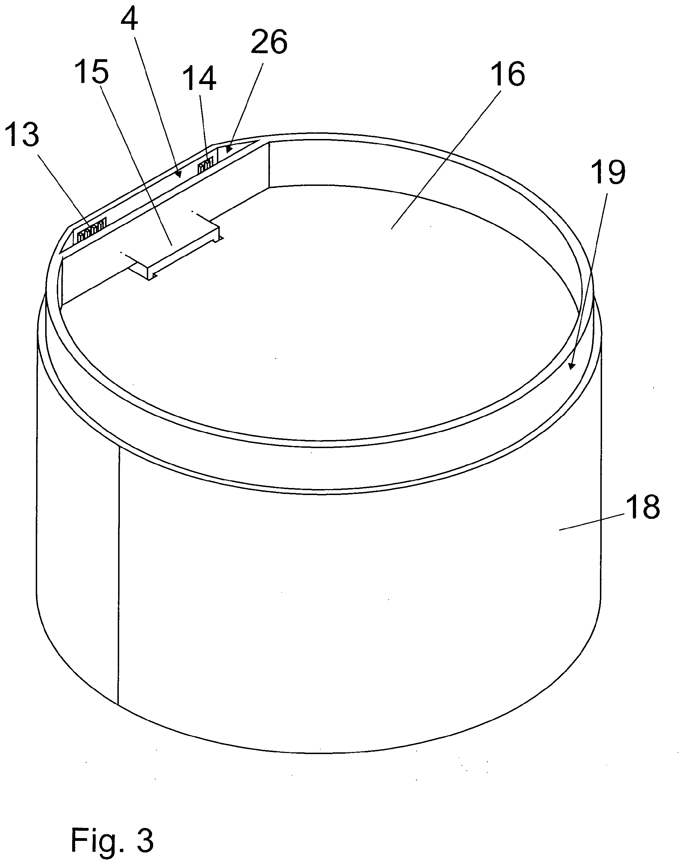

Die Platine 4 wird wie in Figur 3 dargestellt oberseitig und unterseitig der blockartigen Aufnahmen 7, 8 mit jeweils einer Verbindungsplatte 16, 17 verbunden, die eine nicht weiter dargestellte elektrische Verbindung zu den Batteriezellen 6 herstellen. Die oberseitig und unterseitig der blockartigen Aufnahmen 7, 8 angeordneten Verbindungsplatten 16, 17 kontaktieren die Batteriezellen 6 mit passend zu der Zellenanordnung in den blockartigen Aufnahmen 7, 8 ausgebildeten, nicht weiter erkennbaren Kontaktierungsbahnen und verschalten die Batteriezellen 6 dadurch z.B. seriell miteinander. Die Kontakte zwischen Verbindungsplatten 16, 17 und Batteriezellen 6 können dabei entfernbar oder nicht entfernbar gestaltet werden, z.B. geschweißt oder mit Federkontakten oder ähnlichem. Die Verbindungsplatten 16, 17 erzeugen die Zusammenschaltung der Batteriezellen 6 zu einen Pack, vorzugsweise als Reihenschaltung. Die Verbindungsplatten 16, 17 leiten dabei die Zellenpotentiale über eine steckschuhartige Kontaktierung 15 wie bei einem Pfostenstecker zur Platine 4. Diese Kontaktierung ist hier als Pfostenstecker 15 dargestellt, möglich ist aber auch das Vorsehen von Lötverbindungen oder Flexkabeln. Die Verbindungsplatten 16, 17 können mit nicht weiter erkennbaren mechanischen Klemmen an einer Außenhülle 18 fixiert werden. Die Platine 4 weist Anschlüsse 14 für die Leistungsübertragung und Kommunikationsanschlüsse 13 auf, wobei die Kommunikation redundant ausgeführt werden kann, z.B. über zwei redundante Bussysteme. Die Kontaktanordnung 13, 14 wird dabei so gewählt, dass sich durch das Stapeln der Subeinheiten 2 eine Verschaltung der einzelnen Subeinheiten 2 zur Makrozelle 1 ergibt. Das Messsystem 22 vermisst die Einzelzellen (z.B. Soh, SOC, Temperatur etc.).

Damit die Subeinheiten 2 ineinander passen, werden die Subeinheiten 2 auf einer Oberseite der Außenhülle 18 mit einer Verbindungsaussparung 19 versehen, welche auf die Unterseite der nächsten Subeinheit 2 passt. Die nutartige Orientierungshilfe 20 am Außenumfang der Außenhülle 18 sorgt zusammen mit einer gegengleichen Form an der Innenseite des Trägergehäuses 21 für eine Verdrehsicherheit bei dem Einstecken der Subeinheiten 2 in das Trägergehäuse 21.

Der Aufnahmeraum 26 wird genutzt, um eine berührungssichere Verbindung zwischen zwei benachbarten Subeinheiten 2 zu realisieren. Die Kommunikationskontakte 13 werden nach dem gleichen Prinzip in den Aufnahmeraum 26 für die Platine 4 und eine Halteplatte 5 eingesetzt. Hierzu werden die Kontakte 13, 14 innerhalb des sehr schmalen Aufnahmeraums 26 angeordnet und liegen durch die Wandungen des Aufnahmeraums 26 zurückgesetzt und verdeckt, so dass unter normalen Bedingungen ein Berühren der Kontakte 13, 14 nicht passieren kann. Die jeweiligen Gegenkontakte 13, 14 stehen, ebenfalls verdeckt in einem komplementär ausgebildeten Aufnahmeraum 26, zurück versetzt und greifen beim Zusammenstecken der Subeinheiten 2 in diesen schmalen Aufnahmeraum 26 ein und berühren die Kontakte 13, 14 der anderen Subeinheit 2. Die Platine 4 kommuniziert darüber mit dem Master-BMS 3.

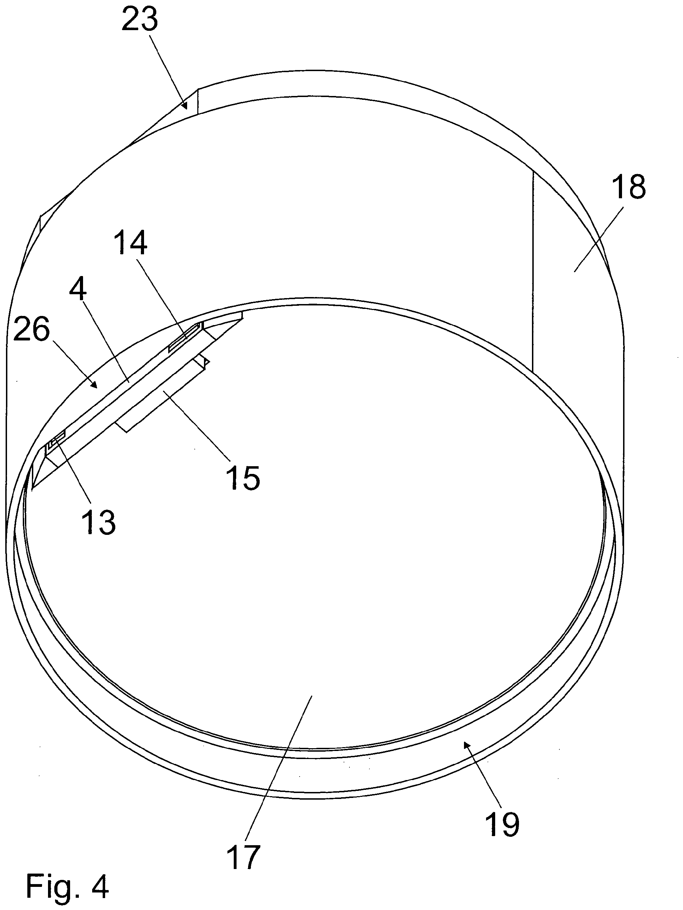

Der blockartigen Aufnahmen 7, 8 jeder Subeinheit 2 werden in den Freiraum einer ebenfalls grundsätzlich runden Außenhülle 18 eingesetzt. Figur 3 zeigt eine Ansicht von oben auf eine Subeinheit 2 mit oberer Verbindungsplatte 16 und oberen Kontakten 13, 14 der Platine 4, bestehend aus Kommunikations- und Leistungskontakten, in der Außenhülle 18. Die hier rund dargestellte Außenhülle 18 kann grundsätzlich eine beliebige Außenform aufweisen und umschließt die Anordnung aus blockartigen Aufnahmen 7, 8, Verbindungsplatten 16, 17 und Batteriezellen 6 und erlaubt durch Verdecken der Kontakte 13, 14 zwischen den Subeinheiten 2 eine Berührungssicherheit. Die Außenhülle 18 verbindet diese zu einer berührungssicheren Einheit und verdeckt dementsprechend auch die Platine 4. Figur 4 zeigt eine Ansicht von unten auf die Subeinheit 2 gemäß Figur 3, bestückt mit einer Platine 4 und der unteren Verbindungsplatte 17. Darin sind auch die Gegenkontakte 13, 14 für Leistung und Kommunikation angeordnet. Diese Kontakte 13, 14 sind verdeckt in dem Aufnahmeraum 26 und dadurch berührungssicher angeordnet sowie mechanisch geschützt. Die Batteriezellen 6 werden von unten mit der unteren Verbindungsplatte 17 abgedeckt.

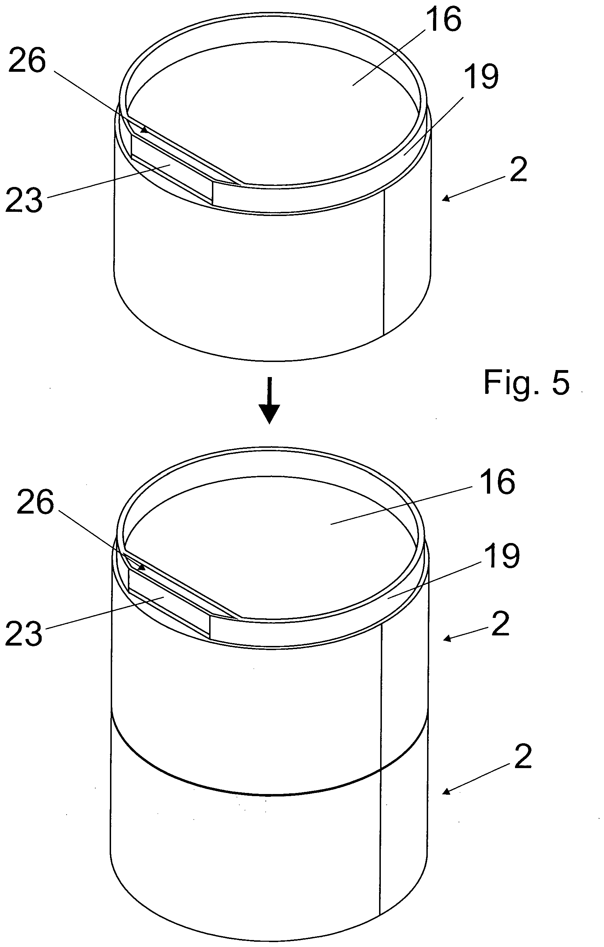

In der Figur 5 ist ein Stapel aus drei Subeinheiten 2 zu erkennen, von denen die beiden unteren Subeinheiten 2 schon einander mechanisch zugeordnet sind und die obere Subeinheit 2 hierauf aufgesteckt werden kann. Der Stapel kann aus beliebig vielen Subeinheiten 2 gebildet werden und stellt eine mechanische und elektrische Verbindung zwischen den Subeinheiten 2 her. Ein Stapel von x Subeinheiten 2 ergibt dann eine Makrozelle 1 als ein Element mit hoher Spannung.

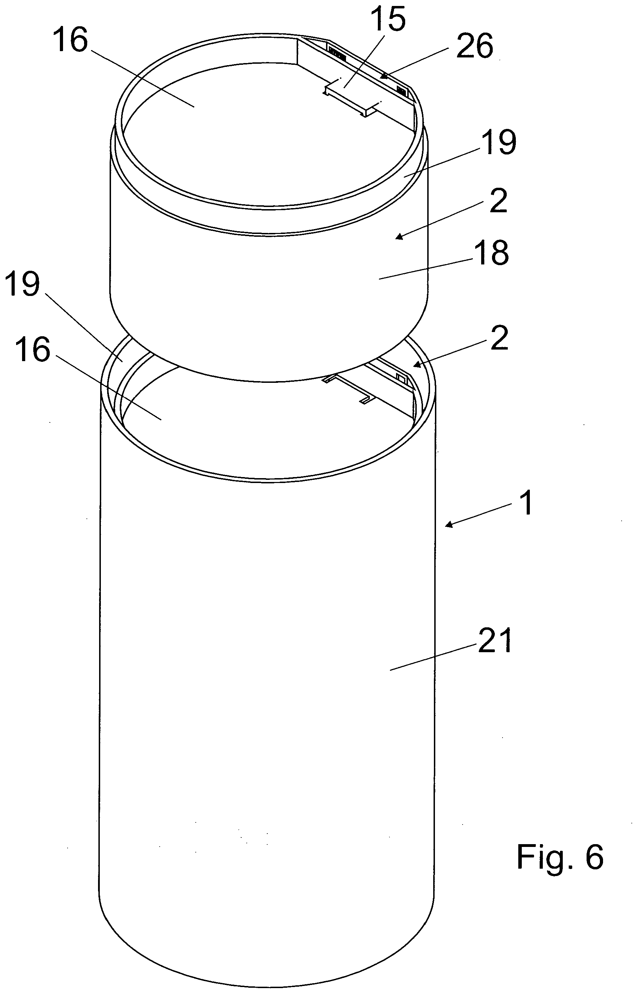

In der Figur 6 ist ein Stapel von Subeinheiten 2 in einem Trägergehäuse 21 zu erkennen. In dem z.B. horizontal angeordneten Trägergehäuse 21 werden die Subeinheiten 2 gestapelt. Das Trägergehäuse 21 besitzt Anschlüsse nach außen. Mindestens die Leistungskontakte 14, möglicherweise auch Kommunikationskontakte 13 oder Kühlungskontakte. Das Trägergehäuse 21 bildet mit den eingesteckten Subeinheiten 2 die Makrozelle 1 und führt die Subeinheiten 2 mechanisch. Es erlaubt, zum Zweck des Austausches, die Subeinheiten 2 von einem Ende des Trägergehäuses 21 zum anderen Ende durchzuschieben, etwa mit Hilfe eines Roboters oder einer Handhabungseinheit. Eine Hintereinanderschaltung derartiger Makrozellen 1 ergibt dann die Hochspannungsbatterie.

Denkbare Maße einer Subeinheit 2 können etwa sein:
Durchmesser: 155 mm, Höhe: 85 mm

Denkbare Maße einer Makrozelle 1 können etwa sein:
Durchmesser: 160 mm und Höhe: 1135 mm

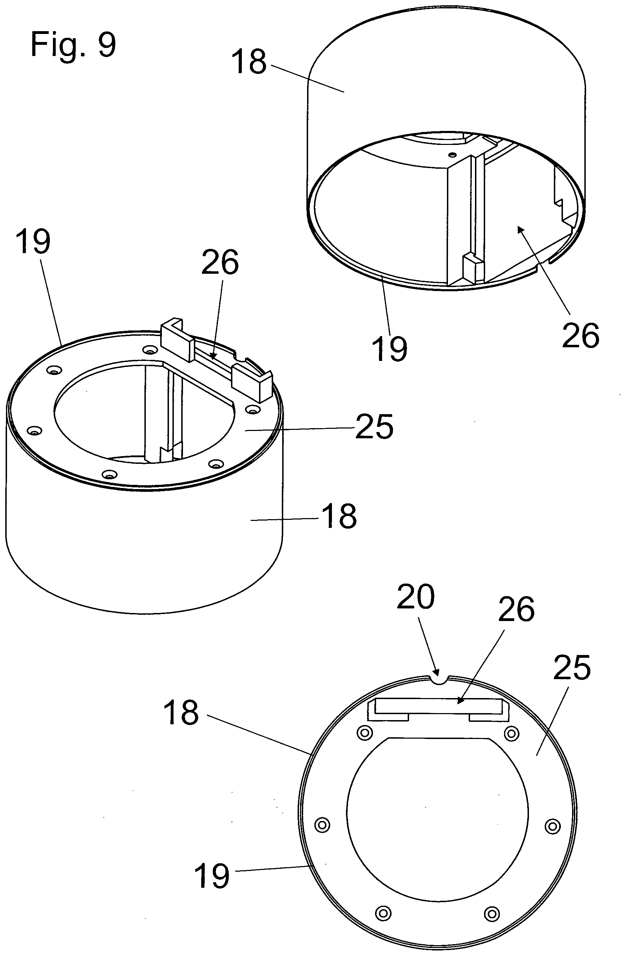

In der Figur 9 ist die Außenhülle 18 der Subeinheiten 2 mit daran angeordneten Aufnahmen für eine Halteplatte und eine Platine für Kontaktierungs- und Leiteinrichtungen dargestellt in zwei räumlichen Ansichten von oben und unten und in einer Draufsicht. Die Außenhülle ist passend zu dem Querschnitt des Trägergehäuses ebenfalls rund ausgebildet und weist oberseitig eine ringförmige Abdeckung 25 auf, gegen die die blockartigen Aufnahmen 7, 8 mit der Verschraubung 9 verschraubt werden können. Am oberen und unteren Umfang der Außenhülle 18 sind die Verbindungsaussparungen 19 zum Zusammenfügen mit weiteren Subeinheiten 2 vorgesehen. In axialer Richtung verläuft die nutartige Orientierungshilfe 20 zur Ausrichtung der Außenhülle 18 relativ zum Trägergehäuse 21. Im Bereich der Abflachung 11 der später eingesetzten blockartigen Aufnahmen 7, 8 ist ein Aufnahmeraum 26 für die Platine 4 und eine die Platine 4 außenseitig überdeckende und isolierende Halteplatte 5 zu erkennen, in dem alle zur Weiterleitung von Spannungen und Signalen notwendigen Kontaktierungs- und Leiteinrichtungen angeordnet werden können.

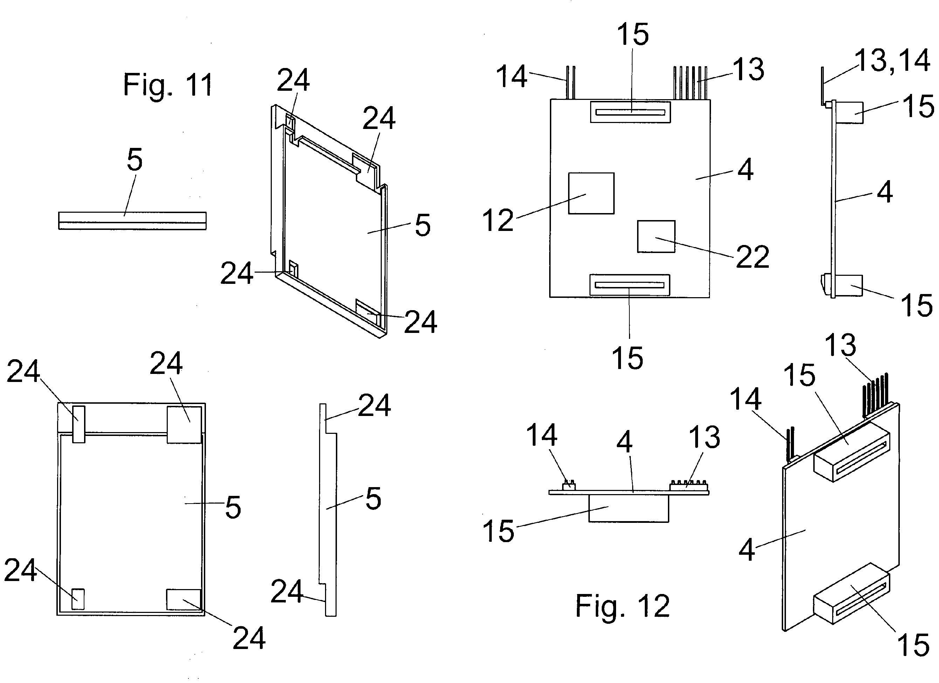

Figur 11 zeigt in verschiedenen Ansichten eine Halteplatte 5 für die Aufnahme und Abdeckung der Platine 4 für Kontaktierungs- und Leiteinrichtungen, in der Aufnahmeräume 24 für die Kontakte 13 und 14 zu erkennen sind. Die Halteplatte 5 deckt diese Kontakte 13, 14 isolierend nach außerhalb der Subeinheit ab und vermeidet dadurch unbeabsichtigtes Berühren der Kontakte 13, 14 bei der Montage oder Handhabung der Subeinheit ohne umgebende Außenhülle 18.

Figur 12 zeigt in verschiedenen Ansichten eine Platine 4 für Kontaktierungs- und Leiteinrichtungen mit daran angeordneten Steckverbindern 13, 14, 15 zur Kontaktierung an die Verbindungsplatten 16, 17 und benachbart angeordnete Subeinheiten 2. Ebenfalls sind auf der Platine 4 der Batteriemanagement-Slave 12 und ein Messsystem schematisch angedeutet.

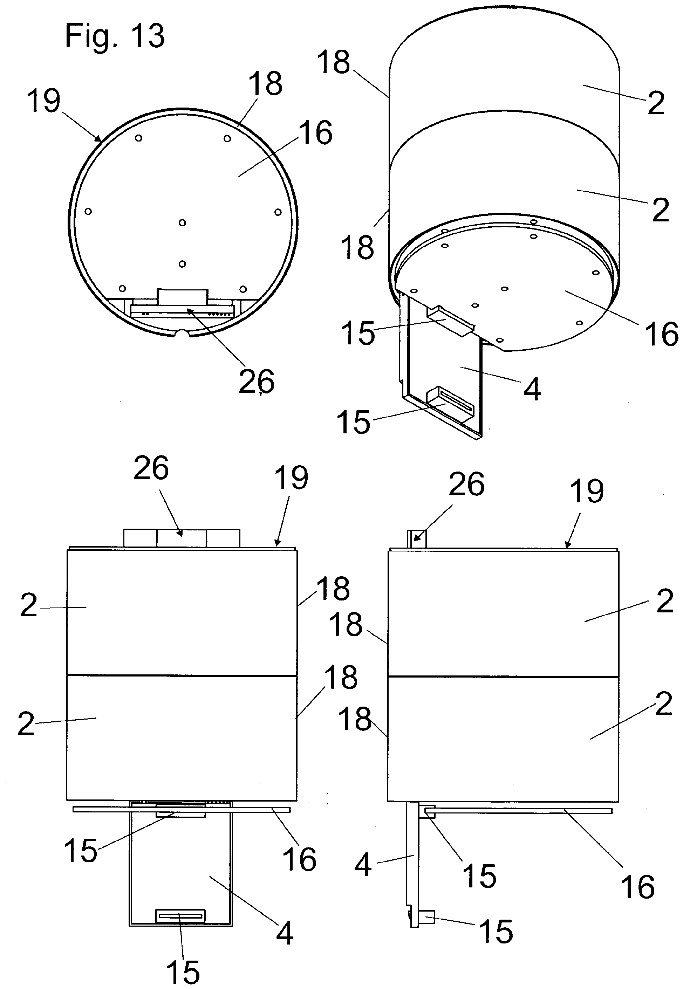

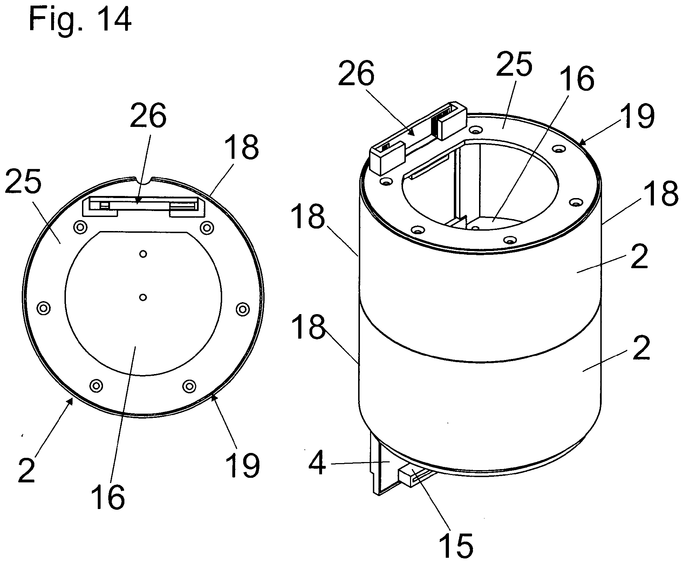

In der Figur 13 sind mehrere Ansichten von unten und von der Seite übereinander gestapelter Subeinheiten 2 mit Darstellung der hervorstehenden Platine 4 für Kontaktierungs- und Leiteinrichtungen zur Kontaktierung mit einer benachbarten Subeinheit 2 sowie die Kontaktierung der Verbindungsplatten 16, 17 abgebildet. Unterseitig erkennt man, wie der Pfostenstecker 15 der nächsten benachbarten Subeinheit 2 in Längsrichtung der Außenhülle 18 mit der Verbinderplatte 16 derselben Subeinheit radial zusammen gesteckt angeordnet ist und daher die Kontaktierung zwischen der Platine 4 und den Batteriezellen 6 herstellt. Oberseitig sind die Kontakte 13, 14 der Platine in die entsprechenden Gegenkontakte der Platine 4 der darüber angeordneten Subeinheit 2 eingesteckt und kontaktiert die Subeinheit 2 mit anderen Subeinheiten 2 und dem Batteriemanagement-Master 3. Die Figur 14 zeigt Ansichten der übereinander gestapelter Subeinheiten gemäß Figur 13 von oben in einer seitlichen Ansicht.

Da die Subeinheiten 2 in ihrer Zuordnung zueinander und entsprechenden Haltevorrichtungen möglichst automatisiert z.B. mit einen Roboter getauscht werden können sollen, ist ein System gewählt worden, bei denen die einzelnen Subeinheiten 2 leicht getauscht und gewechselt werden können. Damit ein solcher Wechsel vorzogen werden kann, wurde hier bevorzugt eine runde Grundform des Trägergehäuses 21 und der Subeinheiten 2 gewählt. Es sind aber auch eine Vielzahl anderer, z.B. prismatisch-eckiger Grundformen denkbar. Ziel ist es dabei, dass die Subeinheiten 2 innerhalb eines gemeinsamen Trägergehäuses 21 so weit z.B. mit einem Roboter oder einer sonstigen Handhabungseinrichtung durchgeschoben werden können, bis defekte oder gealterte Subeinheiten 2 frei kommt und aus dem Trägergehäuse 21 entnommen werden können, so dass sie ausgetauscht werden können. Hierbei wird z.B. von dem Roboter der Stapel der Subeinheiten 2 von einer Seite aus immer weiter durch Einstecken neuer Subeinheiten 2 und Schieben des Stapels der Subeinheiten 2 innerhalb des Trägergehäuses 21 voran bewegt, bis die einzelne oder die mehreren auszutauschenden Subeinheiten 2 am anderen Ende des Trägergehäuses 21 frei werden und entnommen werden können.

Die Außenmaße für eine solche Makrozelle 1 sind so gewählt, dass alle Bauteile mitsamt Anschlüssen, Verbindungen nach außen und Datenverbindungen in ein Rohr als Trägergehäuse 21, z.B. ein aus der Sanitärtechnik bekanntes KG-Rohr aus Kunststoff passen. KG-Rohre haben den Vorteil, dass diese auf dem Markt günstig verfügbar sind. Es ist aber selbstverständlich auch denkbar, andere Trägergehäuse 21 zu verwenden, die entweder aus handelsüblichen Teilen bestehen oder speziell für diese Anwendung entwickelt werden.

Die Erfindung betrifft auch eine Anordnung einer Anzahl von Makrozellen 1 in einem elektrischen Energiespeicher, bei der die längserstreckten Trägergehäuse 21 zur Aufnahme der Subeinheiten 2 im Wesentlichen horizontal angeordnet und die Enden der Trägergehäuse 21 offen sind, so dass automatische Handhabungseinrichtungen die innerhalb der längserstreckten Trägergehäuse 21 Subeinheiten 2 aus dem längserstreckten Trägergehäuse 21 ausstoßen und neue Subeinheiten 2 in das längserstreckte Trägergehäuse 21 einbringen können. Hierbei können eine Anzahl von Makrozellen 1 matrixartig parallel zueinander angeordnet sein und die automatischen Handhabungseinrichtungen Verschiebeeinrichtungen aufweisen, die neue Subeinheiten 2 zumindest in einen Abschnitt des längserstreckten Trägergehäuses 21 hineinschieben können. Dadurch können die automatischen Handhabungseinrichtungen solange neue Subeinheiten 2 in das längserstreckte Trägergehäuse 21 hineinschieben, bis eine defekte Subeinheit 2 aus dem Trägergehäuse 21 heraus gedrückt wurde.

Die erfindungsgemäße Vorrichtung und die automatischen Handhabungseinrichtungen können in ein abgeschlossenes Gehäuse oder Volumen eingebracht werden, das mit einer sauerstoffreduzierten oder inerten Atmosphäre geflutet werden kann.

Mit den erfindungsgemäßen Makrozellen 1 ist es möglich, eine höhere Systemspannung zu erzielen. Die erhöhte Systemspannung führt zu niedrigeren Strömen. Zusätzlich erlaubt das Design das Verwenden von Robotern, welche den elektrischen Energiespeicher 1 ggf. auch im laufenden Betrieb warten können. Dadurch ist keine menschliche Wartung mehr nötig. Durch den Wegfall der menschlichen Wartung kann die volumetrische Energiedichte erhöht und auch eine sauerstoffreduzierte Atmosphäre eingesetzt werden

Besonders ist der prinzipielle Aufbau einer solchen Makrozelle 1 und die Möglichkeit, die Wartung mit einen Roboter zu durchzuführen. Zusätzlich ist durch den Aufbau eine Skalierbarkeit der einzelnen Makrozelle 1 möglich. Diese Makrozellen 1 können wiederum skaliert werden. Zusätzlich können die Subeinheiten 2 aus einem Material hergestellt werden, welches bei erhöhter Temperatur die Farbe wechselt und Rückschlüsse auf Vorgänge innerhalb dieser Sub-Einheiten zulässt.

### Sachnummernliste

- 1: - Makrozelle
- 2: - Subeinheit
- 3: - Master-Batteriemanagementsystem
- 4: - Platine Kontaktierungs- und Leiteinrichtungen
- 5: - Halteplatte
- 6: - Batteriezelle
- 7: - blockartige Aufnahme
- 8: - blockartige Aufnahme
- 9: - Verschraubung
- 10: - Aufnahmeöffnungen
- 11: - gerader Randbereich
- 12: - Batteriemanagement-Slave
- 13: - Steckverbinder Leistungsübertragung
- 14: - Steckverbinder Kommunikationsübertragung
- 15: - Steckverbinder Verbindungsplatte
- 16: - obere Verbindungsplatte
- 17: - untere Verbindungsplatte
- 18: - Außenhülle
- 19: - Verbindungsaussparung
- 20: - nutartige Orientierungshilfe
- 21: - Trägergehäuse
- 22: - Messsystem
- 23: - Abflachung Außenhülle
- 24: - Aufnahmeraum Steckkontakte
- 25: - Abdeckung
- 26: - Einsteckraum Platine

## Patentansprüche

1. Vorrichtung zum Speichern von elektrischer Energie, bei der eine Anzahl von Batteriezellen (6) modulartig in Batteriemodulen (2) gehalten und elektrisch miteinander verschaltet angeordnet sind, wobei mindestens zwei derartige Batteriemodule (2) in einer stapelartigen Anordnung einander zugeordnet und elektrisch miteinander verschaltet angeordnet sind,
**dadurch gekennzeichnet, dass**
die Vorrichtung aus mindestens einer Makrozelle (1) oder einer Anzahl von parallel und/oder in Reihe geschalteten Makrozellen (1) gebildet ist, wobei jede Makrozelle (1) aus in Reihe geschalteten Subeinheiten (2) besteht und die Subeinheiten (2) eine Anzahl von Batteriezellen (6) enthalten, die wiederum in Reihe geschaltet sind, und die Subeinheiten (2) hintereinander in einem sich vorzugsweise längs erstreckenden Trägergehäuse (21), vorzugsweise einem Rohr oder dgl., verschiebbar angeordnet sind.

2. Vorrichtung gemäß Anspruch 1, **dadurch gekennzeichnet, dass** jede Subeinheit (2) mindestens eine blockartige Aufnahme (7, 8) mit einer Anzahl, vorzugsweise zylindrischer, Aufnahmeöffnungen (10) zur Aufnahme von Batteriezellen (6) aufweist, wobei die Aufnahmeöffnungen (10) der blockartigen Aufnahme (7, 8) insbesondere eine strukturierte, vorzugsweise sechseckige, Anordnung zueinander oder eine Anordnung im Sinne einer dichten Packung zueinander aufweisen.

3. Vorrichtung gemäß einem der Ansprüche 1 oder 2, **dadurch gekennzeichnet, dass** die blockartige Aufnahme (7, 8) eine dem sich längs erstreckenden Trägergehäuse (21) angepasste Umfangsform aufweist.

4. Vorrichtung gemäß einem der vorstehenden Ansprüche, **dadurch gekennzeichnet, dass** die blockartige Aufnahme (7, 8) einen Kontaktierungsraum (26), vorzugsweise in einem, insbesondere abgeflachten, Umfangsbereich, aufweist, in den Kontaktierungs- und Leiteinrichtungen (4, 13, 14, 15) zur elektrischen Verbindung der Batteriezellen (6) mit weiteren Kontaktierungs- und Leiteinrichtungen (4, 13, 14, 15) der Subeinheit (2) oder weiterer Subeinheiten (2) einbringbar sind.

5. Vorrichtung gemäß Anspruch 4, **dadurch gekennzeichnet, dass** in den Kontaktierungsraum (26) der blockartigen Aufnahme (7, 8), vorzugsweise platinenartig ausgestaltete, Kontaktierungs- und Leiteinrichtungen (4, 13, 14, 15) einsetzbar sind, mit denen die Batteriezellen (6) und benachbarte blockartige Aufnahmen (7, 8) miteinander verbindbar und elektrische Ströme und/oder elektrische Signale weiterleitbar sind.

6. Vorrichtung gemäß einem der Ansprüche 4 oder 5, **dadurch gekennzeichnet, dass** in den Kontaktierungsraum (26) der blockartigen Aufnahme (7, 8) mindestens eine Messeinrichtung (22) einsetzbar ist, mit der der Zustand der Batteriezellen (6), insbesondere der elektrische und/oder thermische Zustand und/oder ein Fehlerzustand, überprüfbar ist.

7. Vorrichtung gemäß einem der vorstehenden Ansprüche, **dadurch gekennzeichnet, dass** die blockartige Aufnahme (7, 8) sowie die Kontaktierungs- und Leiteinrichtungen (4, 13, 14, 15) im Bereich des Kontaktierungsraums (26) in eine Außenhülle (18) einbringbar sind.

8. Vorrichtung gemäß einem der vorstehenden Ansprüche, **dadurch gekennzeichnet, dass** im Bereich oberhalb und unterhalb jeder blockartigen Aufnahme (7, 8) eine obere und eine untere Verbindungsplatte (16, 17) angeordnet sind, die einerseits in den Bereich der Enden der Batteriezellen (6), diese elektrisch kontaktierend, eingreift und andererseits in den Kontaktierungsraum (26) der blockartigen Aufnahme (7, 8) mit den Kontaktierungs- und Leiteinrichtungen (4, 13, 14, 15) und/oder der Messeinheit (22) hinein greift.

9. Vorrichtung gemäß Anspruch 8, **dadurch gekennzeichnet, dass** obere und untere Verbindungsplatte (16, 17) die Batteriezellen (6), vorzugsweise seriell, miteinander und mit den Kontaktierungs- und Leiteinrichtungen (4, 13, 14, 15) und/oder der Messeinheit (22) verbinden, wobei insbesondere obere und untere Verbindungsplatte (16, 17) die Batteriezellen (6) berührungsgeschützt abdecken, wobei obere und untere Verbindungsplatte (16, 17) vorzugsweise symmetrisch aufgebaut sind.

10. Vorrichtung gemäß einem der Ansprüche 8 oder 9, **dadurch gekennzeichnet, dass** obere und untere Verbindungsplatte (16, 17) und die vorzugsweise platinenartig ausgebildeten Kontaktierungs- und Leiteinrichtungen (4, 13, 14, 15) elektrisch kontaktierend und mechanisch klemmend abschnittsweise ineinander steckbar sind, insbesondere zwischen oberer und unterer Verbindungsplatte (16, 17) und, vorzugsweise platinenartig ausgebildeten, Kontaktierungs- und Leiteinrichtungen (4, 13, 14, 15) elektrische Steckverbinder verwendbar sind.

11. Vorrichtung gemäß einem der vorstehenden Ansprüche, **dadurch gekennzeichnet, dass** als Kontaktierungs- und Leiteinrichtungen (4, 13, 14, 15) mindestens eine mehradrige Leiteinrichtung (13) für die Spannung und mindestens eine mehradrige Leiteinrichtung (14), vorzugsweise über ein Bussystem, zur Übermittlung der Daten einer Messeinheit (22) oder dgl. vorgesehen sind.

12. Vorrichtung gemäß einem der vorstehenden Ansprüche, **dadurch gekennzeichnet, dass** die Verbindungsplatten (16, 17) in dem Kontaktierungsraum (26) im Bereich der blockartigen Aufnahme (7, 8), vorzugsweise die Batteriezellen (6) mechanisch halternd, einsteckbar und verrastbar gehalten sind.

13. Vorrichtung gemäß einem der vorstehenden Ansprüche, **dadurch gekennzeichnet, dass** die Kontaktierungs- und Leiteinrichtungen (4, 13, 14, 15) in Halteplatten (5) aufgenommen sind, die die Kontaktierungs- und Leiteinrichtungen (4, 13, 14, 15) berührungsgeschützt umgeben und an der Außenhülle (18) der Subeinheit (2) festlegbar sind.

14. Vorrichtung gemäß einem der vorstehenden Ansprüche, **dadurch gekennzeichnet, dass** der Bereich des Kontaktierungsraums (26) für die Kontaktierungs- und Leiteinrichtungen (4, 13, 14, 15) derart von in oder an der Außenhülle (18) angeordneten, vorzugsweise wallartigen Abschnitten der Außenhülle (18) umgeben ist, dass die Kontaktierungs- und Leiteinrichtungen (4, 13, 14, 15) berührungsgeschützt in einem nutartig vertieften Bereich zu liegen kommen.

15. Vorrichtung gemäß einem der vorstehenden Ansprüche, **dadurch gekennzeichnet, dass** die Außenhülle (18) jeder Subeinheit (2) oberseitig und unterseitig angeordnete Gehäuseformen (19) aufweist, die mit zugeordnet gegengleichen Gehäuseformen (19) benachbart angeordneter Subeinheiten (2) im gleichen Stapel der Makrozelle (1) mechanisch zusammensteckbar und aneinander festlegbar sind, wobei insbesondere im Bereich der zugeordnet gegengleichen Gehäuseformen (19) benachbart angeordneter Subeinheiten (2) Kontakteinrichtungen (13, 14, 15) angeordnet sind, die die mehradrige Leiteinrichtung (13) für die Spannung und die mindestens eine mehradrige Leiteinrichtung (14) zur Übermittlung der Daten der Messeinheit (22) ineinander gesteckter Subeinheit (2) miteinander elektrisch verbinden.

16. Vorrichtung gemäß einem der vorstehenden Ansprüche, **dadurch gekennzeichnet, dass** jede Makrozelle (1) mindestens ein Batteriemanagementsystem-Master (3, Master-BMS) aufweist, wobei vorzugsweise jede Subeinheit einen Batteriemanagementsystem-Slave (12, Slave-BMS) aufweist, der über Kontaktierungs- und Leiteinrichtungen (4, 13, 14, 15) mit dem Batteriemanagementsystem-Master (3, Master-BMS) der Makrozelle (1) in elektrischer Verbindung steht.

17. Vorrichtung gemäß Anspruch 16, **dadurch gekennzeichnet, dass** der Batteriemanagementsystem-Slave (12, Slave-BMS) die Meßwerte der mindestens einen Messeinheit (22) zum Zustand der Batteriezellen (6) an den Batteriemanagementsystem-Master (3, Master-BMS) übermittelt, wobei vorzugsweise der Batteriemanagementsystem-Slave (12, Slave-BMS) das Zellbalancing der Batteriezellen (6) eigenständig und/oder zusammen mit dem Batteriemanagementsystem-Master (3, Master-BMS) ausführt.

18. Vorrichtung gemäß einem der Ansprüche 16 oder 17, **dadurch gekennzeichnet, dass** das Batteriemanagementsystem-Master (3, Master-BMS) an einer der Subeinheiten (2) einer Makrozelle (1) angeordnet ist und mit allen anderen Batteriemanagementsystem-Slaves (12, Slave-BMS) der anderen Subeinheiten (2) der Makrozelle (1) in elektrischer Verbindung steht.

19. Vorrichtung gemäß einem der vorstehenden Ansprüche, **dadurch gekennzeichnet, dass** eine derartige Anzahl von Batteriezellen (6) in den Subeinheiten (2) angeordnet und eine derartige Anzahl von Subeinheiten (2) miteinander zur Makrozelle (1) verschaltet sind, dass die Makrozelle (1) eine Zellenspannung von vorzugsweise gleich oder mehr als 1,5 kV aufweist.

20. Vorrichtung gemäß einem der vorstehenden Ansprüche, **dadurch gekennzeichnet, dass** mindestens je eine der Aufnahmeöffnungen (10) in den Subeinheiten (2) für ein Kühlsystem, insbesondere für eine Kühlung mittels Luft oder Gas oder Kühlflüssigkeit oder einem Feststoff mit hoher Wärmeleitfähigkeit nach dem Prinzip der sog. Heat Pipe, nutzbar ist.

21. Vorrichtung gemäß einem der vorstehenden Ansprüche, **dadurch gekennzeichnet, dass** die Vorrichtung eine Anordnung einer Anzahl von Makrozellen (1) in einem elektrischen Energiespeicher aufweist, bei der die längserstreckten Trägergehäuse (21) zur Aufnahme der Subeinheiten (2) im Wesentlichen horizontal angeordnet und die Enden der Trägergehäuse (21) offen sind, so dass automatische Handhabungseinrichtungen die innerhalb der längserstreckten Trägergehäuse (21) befindlichen Subeinheiten (2) aus dem längserstreckten Trägergehäuse (21) ausstoßen und neue Subeinheiten (2) in das längserstreckte Trägergehäuse (21) einbringen können.

22. Vorrichtung gemäß Anspruch 21, **dadurch gekennzeichnet, dass** die automatischen Handhabungseinrichtungen Verschiebeeinrichtungen aufweisen, die neue Subeinheiten (2) zumindest in einen Abschnitt des längserstreckten Trägergehäuses (21) hineinschieben können, wobei die automatischen Handhabungseinrichtungen solange neue Subeinheiten (2) in das längserstreckte Trägergehäuse (21) hineinschieben können, bis eine defekte Subeinheit (2) aus dem Trägergehäuse (21) heraus gedrückt wurde.

23. Vorrichtung gemäß einem der Ansprüche 21 oder 22, **dadurch gekennzeichnet, dass** die Vorrichtung und die automatischen Handhabungseinrichtungen in ein abgeschlossenes Gehäuse oder Volumen eingebracht sind, das mit einer sauerstoffreduzierten oder inerten Atmosphäre geflutet werden kann.
